# EUROPEAN PATENT APPLICATION

(11) **EP 0 859 214 A1**
(43) Date of publication of application: **19.08.1998**
(21) Application number: 97102184.5
(22) Date of filing: 12.02.1997
(51) Int. Cl.: G01B 7/31, G01B 7/34

(54) **Flatness measuring apparatus**

(71) Applicant: FUJI OOZX INC., Fujisawa-shi, Kanagawa-ken (JP)
(72) Inventor: Mishima, Takashi, Fujisawa-shi, Kanagawa-ken (JP); Saito, Kenji, Fujisawa-shi, Kanagawa-ken (JP)
(74) Representative: Weitzel, Wolfgang, Dr.-Ing. Patentanwalt

(57) **Abstract**

A flatness measuring apparatus for a small diameter measurement surface includes a means for holding a workpiece; an intermediate probe held tiltably relative to the axial line of the measurement surface, and having at the lower end a measuring portion brought in contact with the measurement surface and at the upper end a horizontal flange having a diameter larger than that of the measuring portion; and at least three means for measuring the axial displacement of the flange by contact with the flange near the peripheral edge of the flange. Alternatively, the apparatus includes a chucking means for holding a workpiece; at least three measurement auxiliary units vertically movably supported by a stationary member provided over the workpiece and having, at the lower ends opposed to the measurement surface of the workpiece, respective rod-shaped contacts vertically abutted on the measurement surface at positions substantially equally spaced near the outer periphery of the measurement surface; and a means for detecting a vertical displacement of each measurement auxiliary unit by contact with the upper end of each measurement auxiliary unit.

## Description

### BACKGROUND OF THE INVENTION

The present invention relates to a flatness measuring apparatus used for measuring a flatness (gradient relative to the center axial line) of a receiving surface, being in contact with the axial end surface of an intake/exhaust valve, of a tappet of an internal combustion engine or the lower end surface of a chip fitted in the receiving surface.

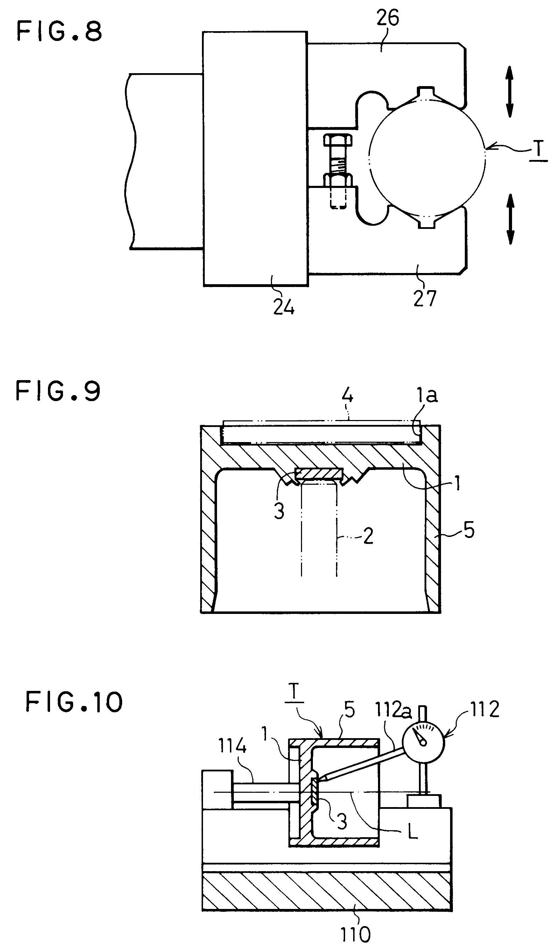

A tappet used for a direct acting type valve operating mechanism in an internal combustion engine is, as shown in Fig. 9, formed in a cylindrical shape with the upper side closed with a top wall 1, and further, in the case of the tappet of a type being made entirely from an aluminum alloy, it has a wear resisting chip 3 fitted in a center portion of the back surface of the top wall 1 on which an intake/exhaust valve 2 is abutted. In addition, a valve gap adjusting shim 4 is loosely fitted in a bottoming hole 1a formed in the upper surface of the top wall 1.

In the tappet in which such a chip 3 is fitted, if there is produced an error in flatness of the lower surface of the chip 3, the chip 3 is susceptible to local wear due to local contact with the axial end of the intake/exhaust valve 2. To cope with such an inconvenience, it is necessary to decide whether or not the flatness of the lower surface of the chip 3, that is, the gradient or perpendicularility thereof relative to the axial line is in an allowable range.

The flatness of the lower surface of the chip 3 has been manually measured as shown in Fig. 10. Namely, a cylindrical portion 5 of a tappet "T" is horizontally placed on a V-block 110, and an end surface of a top wall 1 is pressed to a stopper 114. Thereafter, a probe 112a of a dial gauge 112 is abutted on the outer peripheral portion of an end surface of the chip 3, followed by turning the tappet "T" by the operators hand, and the maximum/minimum values of indication of an indicator of the dial gauge 112 are read. Thus, on the basis of a difference between the maximum value and the minimum value, it is decided whether or not the flatness of the end surface of the chip relative to an axial line "L" is in an allowable range.

The above conventional measuring method, which is made manually, is poor in workability, and it is not good in measurement accuracy because the measurement surface of the chip 3 is too small in diameter (for example, 8 mm) to be measured using the dial gauge 112, and therefore, it has a difficulty in accurately measuring the flatness of the end surface of the chip 3.

### SUMMARY OF THE INVENTION

An object of the present invention is to provide a flatness measuring apparatus for a small diameter surface, which is capable of improving the labor-saving and workability by automating the measurement, and of enhancing the measurement accuracy for a measurement surface having a small diameter.

To achieve the object, according to one aspect of the present invention, there is provided a flatness measuring apparatus for a small diameter surface, which is adapted to measure a gradient of a small diameter measurement surface of a workpiece relative to a vertical axial line, including: a chucking means for holding the workpiece in such a manner that the center of the measurement surface corresponds to a reference axial line for measurement; an intermediate probe held tiltably relative to the center axial line of the measurement surface, the intermediate probe having at the lower end portion thereof a measuring portion capable of being brought in contact with the measurement surface and also having at the upper end portion thereof a horizontal flange having a diameter larger than that of the measuring portion; and at least three pieces of displacement detecting means for measuring the axial displacement of the flange by contact with the upper surface of the flange at positions near the outer peripheral edge of the flange.

With this configuration, since the flatness of a measurement surface can be accurately and automatically measured using a plurality of the displacement detecting means only by contact of the measuring portion provided at the lower end of the intermediate probe, it is possible to improve the labor-saving and to enhance the measurement efficiency; and further, since a slight gradient of the measurement surface can be enlargedly detected, it is possible to measure the measurement surface having a small diameter at a high accuracy.

According to another aspect of the present invention, there is provided a flatness measuring apparatus for a small diameter surface, which is adapted to measure a gradient of a small diameter measurement surface of a workpiece relative to a vertical axial line, including: a chucking means for holding the workpiece in such a manner that the center of the measurement surface corresponds to a reference axial line for measurement; at least three pieces of measurement auxiliary units vertically movably supported by a stationary member provided over the workpiece and having, at the lower end portions opposed to the measurement surface of the workpiece, respective rod-shaped contacts capable of being vertically abutted on the measurement surface at positions substantially equally spaced near the outer periphery of the measurement surface; and a displacement detecting means for detecting a vertical displacement of each of the measurement auxiliary units by contact with the upper end of each of the measurement auxiliary units.

With this configuration, since the individual contacts of the measurement auxiliary units are simultaneously pressed on a measurement surface at a plurality of points and displacements at these points are detected by the displacement detecting means, it is possible to measure the measurement surface having a small diameter; and further, since the measurement is automatically performed for a short period of time, it is possible to improve the measurement efficiency and labor-saving as compared with the prior art manual measurement using the dial gauge.

### BRIEF DESCRIPTION OF THE DRAWINGS

The object, features and advantages of the present invention will become more apparent from the following detailed description of the preferred embodiments of the invention in conjunction with the accompanying drawings, in which:
Fig. 1 is a side view of essential portions of a preferred embodiment of a first invention, with parts partially cutaway;
Fig. 2 is an enlarged sectional view illustrating a principle of measuring a measurement surface of a workpiece using an intermediate probe in the case where the gradient of the measurement surface is zero;
Fig. 3 is an enlarged sectional view, similar to Fig. 2, illustrating the measuring principle in the case where the measurement surface is tilted;
Fig. 4 is a side view of essential portions of a preferred embodiment of a second invention, with parts partially cutaway;
Fig. 5 is an enlarged view taken in the direction A-A in Fig. 4, showing essential portions of the embodiment shown in Fig. 4;
Fig. 6 is an enlarged transverse sectional plan view taken on line B-B in Fig. 4;
Fig. 7 is an enlarged side view showing details of an associated configuration between a measurement auxiliary and a displacement detecting means;
Fig. 8 is an enlarged plan view of a chucking means of the present invention;
Fig. 9 is a vertical sectional front view of a tappet used for measurement according to the present invention; and
Fig. 10 is a schematic view illustrating a prior art procedure of measuring a flatness.

### DETAILED DESCRIPTION OF THE PREFERRED EMBODIMENTS

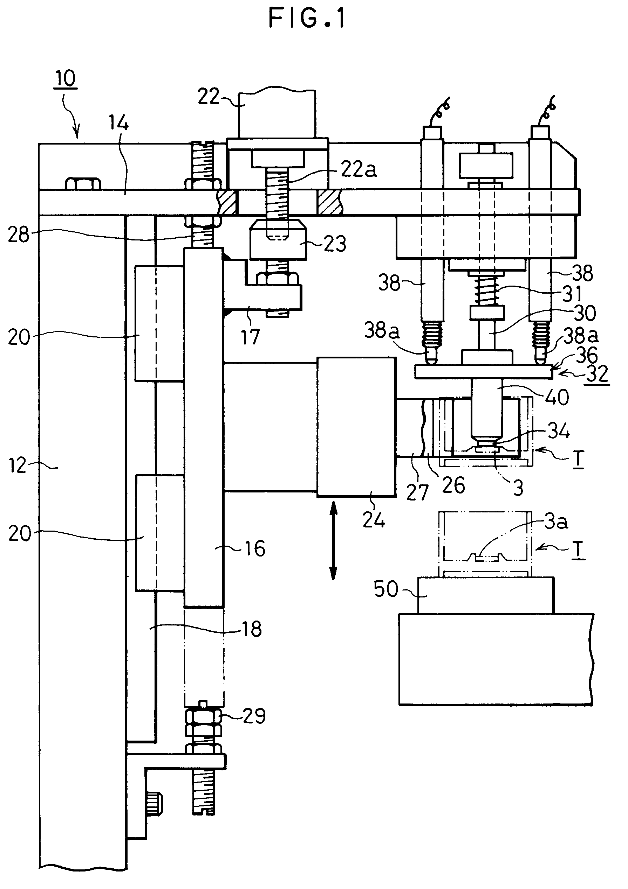

Hereinafter, the first invention will be described with reference to a preferred embodiment shown in Figs. 1 to 3.

Fig. 1 shows essential portions of a flatness measuring apparatus 10. In this figure, reference numeral 12 indicates an upright column formed of a steel plate, which is fixed on a base (not shown) by welding or bolts. A supporting plate 14 is horizontally fixed on the upper portion of the column 12 in such a manner as to be directed forward (hereinafter, the right side in Fig. 1 is taken as the forward direction, and the left side in Fig. 1 is taken as the rearward direction).

Reference numeral 16 indicates a lifting/lowering plate, which can be lifted/lowered between upper and lower stoppers 28, 29 with shock absorbers, via a pair of upper and lower guides 20, 20 which are fixed on the back surface of the lifting/lowering plate 16 and slidably fitted in guide rails 18 formed on the front surface of the column 12.

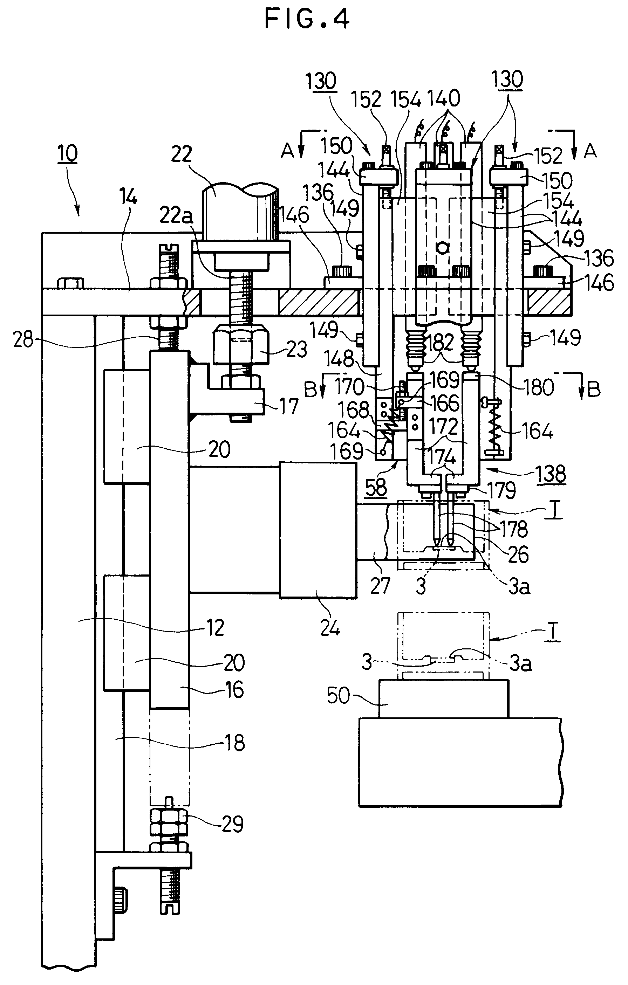

A piston rod 22a of a vertically extending air cylinder 22 is connected to a bracket 17 fixed on the upper portion of the front surface of the lifting/lowering plate 16 via a stroke adjusting member 23. Reference numeral 24 indicates a known air chuck fixed on the front surface of the lifting/lowering plate 16 in such a manner as to be directed forward. A pair of right and left holding pieces 26, 27 are mounted on the front portion of the air chuck 24 relatively movably in the horizontal direction. Each of the holding pieces 26, 27 is , as shown in Fig. 4, formed in a V-shape for holding the outer peripheral surface of a tappet "T" as a workpiece with the axial line of the tappet "T" kept in the vertical direction.

Numeral 30 indicates a slide shaft suspended from the supporting plate 14 slidably on the axial line of the tappet "T" held by the holding pieces 26, 27 of the air chuck 24, and numeral 31 indicates a compressed coil spring for biasing the slide shaft 30 downward.

Numeral 32 indicates an intermediate probe having a downward cylindrical portion 40 in which the lower end portion of the slide shaft 30 is loosely inserted so as to be tiltable. The lower end portion of the cylindrical portion 40 is taken as a small diameter measuring portion 34 which is brought in contact with a measurement surface of the workpiece, and a large diameter disk shaped flange 36 is horizontally connected to the upper portion of the cylindrical portion 40. The flange 36 is adapted to enlarge an axial displacement of the measurement surface, that is, a gradient of the measurement surface relative to the axial line thereof.

Numeral 38 indicates a known differential transformer type electric micrometer for measuring an axial displacement of the flange 36. In this embodiment, four pieces of the electric micrometers 38 are mounted on the supporting plate 14 in such a manner as to be equally spaced by 90 ° in the circumferential direction centered at the axial direction of the slide shaft 30. A vertically movable spindle 38a provided at the lower end portion of each of the electric micrometers 38 is brought in contact with an outer peripheral portion of the upper surface of the flange 36, so that even a slight gradient, that is, an axial displacement of the flange 36 can be enlargedly measured at a high accuracy.

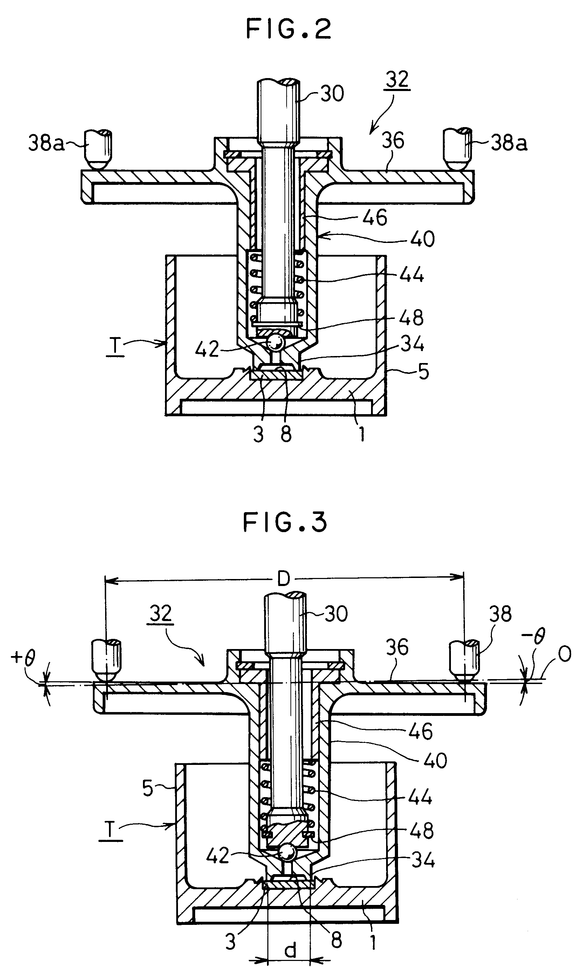

The intermediate probe 32 will be described in detail with reference to Fig. 2.

It mainly includes the flange 36 positioned on the upper portion, the cylindrical portion 40, and the ring-like measuring portion 34 positioned at the lower end. The cylindrical portion 40 has such an inside diameter that the slide shaft 30 can be inserted in the cylindrical portion 40 with a clearance put therebetween. The lower end of the slide shaft 30 is abutted on the bottom portion of the cylindrical portion 40 via a steel ball 42 inserted on the slide shaft 30 side.

The intermediate probe 32 is usually biased upward by a compressed coil spring 44 contractedly provided between a snap ring 48 fitted around the lower end portion of the slide shaft 30 and a bush 46 fitted in the upper portion of the cylindrical portion 40.

The lower surface of the measuring portion 34 of the intermediate probe 32 and the upper surface of the flange 36 are each accurately perpendicular to the common axial line thereof, and accordingly they are parallel to each other. As a result, when the surface of the measuring portion 34 is tilted at an angle, the flange 36 is also tilted at the same angle.

In this embodiment, the intermediate probe 32 is not heavy so much, and each of the two compressed coil springs 31, 44 produces a biasing force by a suitable small compressive force. Accordingly, when the measurement surface of the workpiece is pressed upward onto the surface of the measuring portion 34, the surface of the measuring portion 34 precisely follows the measurement surface, and if the measurement surface is tilted, the entire intermediate probe 32 is tilted centered at the steel ball 42.

Although the spindle 38a of the electric micrometer 38 is biased downward by the compressed coil spring contained in the spindle 38a, a spring constant of the compressed coil spring is set at a very low value so as not to apply a large pressing load to the flange 36 at the time of measurement.

When the outer peripheral surface of the tappet "T" is held by the holding pieces 26, 27 of the air chuck 24 with a measurement surface 3a of the chip 3 directed upward, the axial line of the tappet "T" is directed in the vertical direction as described above, and accordingly, if the gradient of the measurement surface 3a of the chip 3 relative to the axial line becomes zero, it is decided that the chip 3 is fitted in the horizontal direction.

In this case, as shown in Fig. 2, the measuring portion 34 of the intermediate probe 32, which is brought in contact with the measurement surface 3a of the chip 3, is not tilted and axial displacements of the flange 36 measured by four pieces of the electric micrometers 38 being in contact with the upper surface of the flange 36 becomes the same value.

In the case where the measurement surface 3a of the chip 3 has not a good flatness, as shown in Fig. 3, the flange 36 is vertically tilted in accordance with the tilting of the intermediate probe 32, with one side thereof tilted at an angle + θ and the opposed side thereof tilted at an angle - θ relative to a horizontal reference surface O. The tilted angle is detected as an axial displacement by the two electric micrometers 38 disposed in the tilting direction, and is compared with a reference value using a computer. Thus, it is decided whether or not the flatness of the measurement surface 3a of the chip 3 is in an allowable range.

In this case, the axial displacement of the measurement surface 3a of the chip 3 is enlarged into the axial displacement (tilted angle θ ) of the flange 36. For example, as shown in Fig. 3, assuming that an average diameter d of the abutment portion between the measuring portion 34 of the intermediate probe 32 and the chip 3 is taken as 5 mm and a diameter D of the contact portion of the electric micrometers 38 on the flange 36 is taken as 50 mm, the vertical displacement of the measurement surface 3a of the chip 3 is 10 times enlarged. Thus, even a slight tilting of the small diameter measurement surface 3a can be measured at a high accuracy.

The flatness measurement will be performed in the following procedure.

First, indication values of four pieces of the electric micrometers 38 are previously zero-adjusted using a standard master workpiece.

After being lowered to the lower limit position by operation of the air cylinder 22, the air chuck 24 holds the outer peripheral surface of the tappet "T" placed on the workpiece holding base 50 with the chip 3 directed upward by a workpiece feeder (not shown). The lifting/lowering plate 16 is then lifted by contraction of the air cylinder 22 up to the upper limit position at which it is abutted on the stopper 28. At this time, the measurement surface 3a of the chip 3 fitted in the tappet "T" is abutted on the lower surface of the measuring portion 34 of the intermediate probe 32 and the slide shaft 30 is slightly moved up against a biasing force of the compressed coil spring 31, so that the measuring portion 34 is brought in press-contact with the measurement surface 8 of the chip 3. At the same time, the probes 38a of the four electric micrometers 38 are brought in contact with the flange 36. Thus, each electric micrometer 38 measures the axial displacement of the measurement surface 3a of the chip 3 on the basis of the tilting of the surface of the flange 36.

Of the measured values, the maximum value and the minimum value are compared with a predetermined reference value, and on the basis of the compared result, it is decided whether or not the flatness of the chip 3 is in a allowable range.

Although four pieces of the electric micrometers 38 are provided in this embodiment, three pieces of the electric micrometers 38 may be provided in such a manner as to be equally spaced by 120 ° in the circumferential direction, with an effect similar to that in this embodiment.

The measuring portion 34 of the intermediate portion 32, which is formed in a ring-shape in this embodiment, may be composed of at least three projections equally spaced in the circumferential direction. With this configuration, since the projections of the measuring portion 34 are brought in point-contact with the measurement surface 3a of the chip 3, there can be eliminated such a measurement error as to be produced due to contaminants and the like adhering on the measurement surface.

Although the flatness measuring apparatus of the first invention is used for measuring a flatness of the chip 3 in this embodiment, it can be applied to measurement for a flatness of a recess before being fitted with the chip 3; measurement for a flatness of an abutment surface between a tappet of a type having no chip 3 and an intake/exhaust valve; and measurement for a flatness of a small diameter surface of a workpiece other than the tappet.

Next, the second invention will be described with reference to a preferred embodiment shown in Figs. 4 to 7.

As shown in Fig. 4, a supporting plate 14 has a square hole 132 having a center line corresponding to a holding center line of an air chuck 24. In this square hole 132, four pieces of measuring means 130 are fixedly suspended from brackets 142 by means of bolts 136 in such a manner as to be equally spaced by 90 ° in the circumferential direction around the center of the square hole 132.

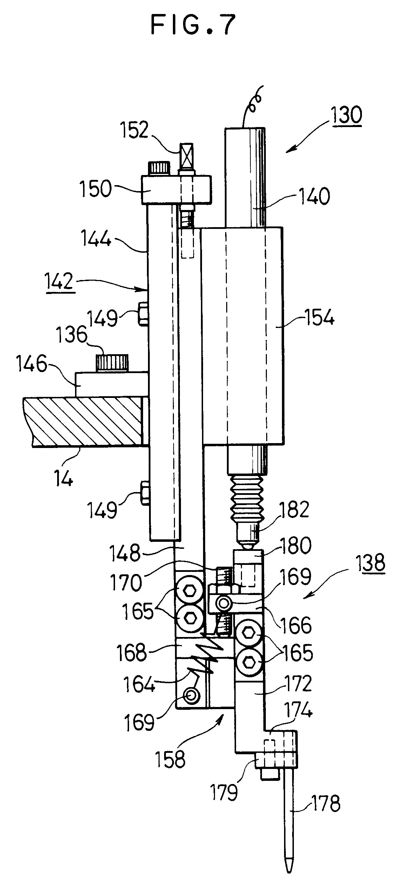

As fully shown in Fig. 7, each of the measuring means 130 includes a measurement auxiliary unit 138 and a known differential transformer type electric micrometer 140 provided over the measurement auxiliary unit 138.

The bracket 142 is composed of a vertical supporting plate 144 and a horizontal stationary plate 146. The stationary plate 146 is fixed on the upper surface of the supporting plate 14 with a bolt 136, and a mounting plate 148 is fixed on the inner surface of the supporting plate 144 with bolts 149.

The mounting plate 148 is mounted in such a manner as to be adjustable in vertical position relative to a mounting surface of the bracket 142 by an adjustment screw 152 mounted only turnably on an adjustment plate 150. A holder 154 is fixed on the inner surface of the upper half portion of the mounting plate 148, and the electric micrometer 140 is inserted in and held by the holder 154 with a probe 182 directed downward.

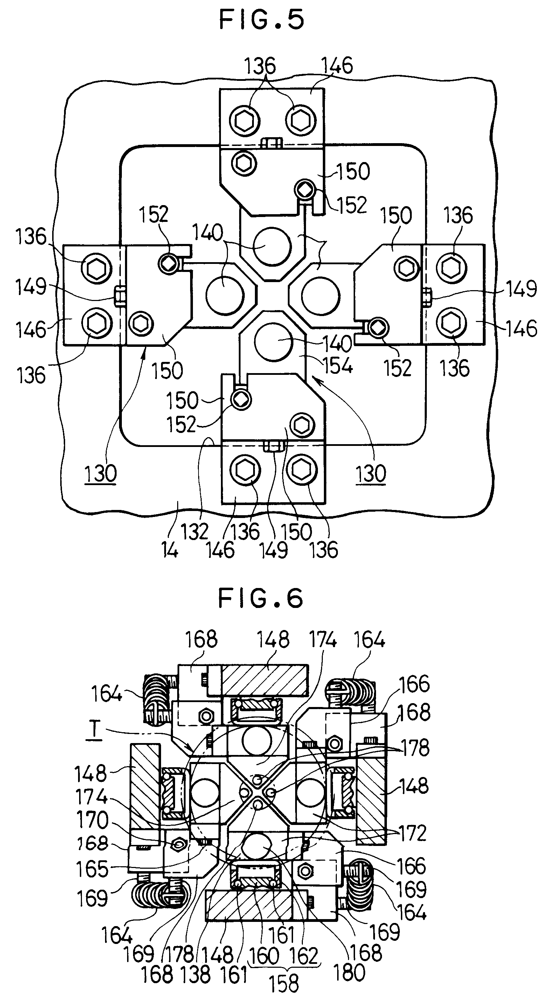

As fully shown in Fig. 6, an inner guide rail 160 of a ball slide (linear ball bearing guide) 158 is fixed on the inner surface of the lower portion of the mounting plate 148, and a squared U-shaped outer guide 162 fixed on the outer surface of the measurement auxiliary unit 138 is fitted around the inner guide rail 160 via a plurality of balls 161. Thus, the measurement auxiliary unit 138 is held by the mounting plate 148 in such a manner as to be smoothly movable in the vertical direction relative to the mounting plate 148. A stopper bolt 170 is screwed in a horizontal holding piece 166 fixed by bolts 165 on one side surface of the measurement auxiliary unit 138 in such a manner as to be adjustable in vertical position, and the lower end of the stopper bolt 170 is abutted on the upper surface of a stopper plate 168 fixed by bolts 165 on one side surface of the mounting plate 148.

The measurement auxiliary unit 138 is usually biased downward by locking both ends of a tension coil spring 164 with locking bolts 169 screwed in the horizontal supporting piece 166 and the lower end portion of the mounting plate 148.

Each measurement auxiliary unit 138 has an L-shape in which a triangle-shaped horizontal piece 174 with a top directed in the center direction of a measurement surface is provided at the lower end portion of a vertical piece 172.

A slender rod like contact 178 extending toward a measurement surface of a workpiece is removably mounted at the leading end (inner end) of the horizontal piece 174 by a fixture 179. The contact 178 has a sharp tip. A circular receiving member 180 made from a hard material is removably screwed in the upper end portion of the vertical piece 172, and the lower end of the expandable probe 182 of the electric micrometer 140 is brought in contact with the upper surface of the receiving member 180.

Next, a procedure of measuring a flatness of a chip using the measurement apparatus in this embodiment will be described. First, indication values of four pieces of the electric micrometers 140 are previously zero-adjusted using a standard master workpiece.

After being lowered to the lower limit position by operation of the air cylinder 22, the air chuck 24 holds the outer peripheral surface of the tappet "T" placed on the workpiece holding base 50 with the chip 3 directed upward by a workpiece feeder (not shown). The lifting/lowering plate 16 is then lifted by contraction of the air cylinder 22 up to the upper limit position at which it is abutted on the stopper 28. At this time, the measurement surface 3a of the chip 3 fitted in the tappet "T" is abutted on the lower end of the contact 178 of each of the four measurement auxiliary units 138 and each of the four measurement auxiliary units 138 is slightly pressed up against a biasing force of the tension coil spring 164, so that the receiving member 180 provided at the upper end of the measurement auxiliary unit 138 is brought in contact with the probe 182 of the electric micrometer 140. Thus, the four electric micrometers 140 measure vertical (axial) displacements of the measurement surface 3a at four points. Of the measured values, the maximum value and the minimum value are compared with a predetermined reference value, and on the basis of the compared result, it is automatically decided whether or not the flatness of the measurement surface 3a of the chip 3 is in an allowable range.

As described above, in this embodiment, the vertical displacement of the measurement surface 3a of the chip 3 fitted in the tappet "T" is not measured by directly pressing the probe 182 of the electric micrometer 140 on the measurement surface, but measured by way of the measurement auxiliary unit 138 interposed between the electric micrometer 140 and the measurement surface of the workpiece.

Namely, by provision of the triangle-shaped horizontal piece 174 directed in the center direction of the measurement surface at the lower end portion of each of the measurement auxiliary units 138 and also provision of the slender rod-shaped contact 178 at the leading end of the horizontal piece 174 in such a manner as to be shifted inward from the axial line of each of the electric micrometers 140, the lower end of each of the four contacts 178 can be simultaneously brought in contact with the measurement surface of the small diameter chip 3. In this embodiment in which the lower ends of the four contacts 178 are concentrically arranged on one circle, the diameter of the circle, that is, the measurement diameter for measurement of a gradient of the measurement surface is set at 5 mm.

The use of the above-described measurement auxiliary units 138 makes it possible to arrange the four electric micrometers 140 without any interference for the measurement surface having a small area.

In addition, there may be considered such a configuration that the measurement auxiliary units 138 are omitted, and instead the small diameter probe 182 of each electric micrometer 140 is bent in an L-shape and the lower end thereof is directly brought in contact with a measurement surface of a workpiece; however, in this configuration, there occur problems that wear is produced at a sliding portion because a local load owing to a bending moment is applied to the probe; accurate measurement for a vertical displacement is obstructed by bending and/or deflection; and the measurement diameter is not specified.

On the contrary, in this embodiment, the contact 178 is not deflected because it is held by the rigid vertical piece 172 and the rigid horizontal piece 174, and further the contact 178 can be smoothly moved in the vertical direction in response to the tilting or displacement of the measurement surface and can accurately transmit the displacement of the measurement surface to the electric micrometer 140 because it is guided by the ball slide 158.

Although the number of each of the electric micrometers 140 and the measurement auxiliary units 138 is set at four pieces in this embodiment, three pieces of each of the electric micrometers 140 and the measurement auxiliary units 138 may be equally spaced by 120 ° in the circumferential direction, with an effect similar to that in this embodiment.

The tension coil spring 164 can be omitted if the measurement auxiliary unit 138 is designed to be usually smoothly dropped by the dead weight.

Although the air chuck 24 is lifted/lowered to move a workpiece towards the measuring means 130 in this embodiment, the measuring means 130 may be lifted/lowered while a workpiece is fixed at a specified position.

Although the flatness measuring apparatus of the second invention is used for measuring a flatness of the chip 3 in this embodiment, it can be applied to measurement for a flatness of a recess before being fitted with the chip 3; measurement for a flatness of an abutment surface between a tappet of a type having no chip 3 and an intake/exhaust valve; and measurement for a flatness of a small diameter surface of a workpiece other than the tappet.

While the preferred embodiments of the present invention have been described using specific terms, such description is for illustrative purposes only, and it is to be understood that changes and variations may be made without departing from the spirit or scope of the following claims.

## Claims

1. A flatness measuring apparatus for a small diameter surface, which is adapted to measure a gradient of a small diameter measurement surface of a workpiece relative to a vertical axial line, comprising:
a chucking means for holding the workpiece in such a manner that the center of the measurement surface corresponds to a reference axial line for measurement;
an intermediate probe held tiltably relative to the center axial line of the measurement surface, said intermediate probe having at the lower end portion thereof a measuring portion capable of being brought in contact with the measurement surface and also having at the upper end portion thereof a horizontal flange having a diameter larger than that of said measuring portion; and
at least three pieces of displacement detecting means for measuring the axial displacement of said flange by contact with the upper surface of said flange at positions near the outer peripheral edge of said flange.

2. A flatness measuring apparatus according to claim 1, wherein said intermediate probe has a bottoming cylindrical portion coaxial with the center of the measurement surface, and which is tiltably held by loosely fitting said cylindrical portion in a slide shaft supported by a suitable stationary member.

3. A flatness measuring apparatus according to claim 2, wherein said intermediate probe is biased upward by an elastic member engaged to said cylindrical portion and said slide shaft, and the bottom surface in said cylindrical portion is brought in contact the lower end surface of said slide shaft via a steel ball.

4. A flatness measuring apparatus according to claim 1, wherein said displacement detecting means Is an electric micrometer.

5. A flatness measuring apparatus for a small diameter surface, which is adapted to measure a gradient of a small diameter measurement surface of a workpiece relative to a vertical axial line, comprising:
a chucking means for holding the workpiece in such a manner that the center of the measurement surface corresponds to a reference axial line for measurement;
at least three pieces of measurement auxiliary units vertically movably supported by a stationary member provided over the workpiece and having, at the lower end portions opposed to the measurement surface of the workpiece, respective rod-shaped contacts capable of being vertically abutted on the measurement surface at positions substantially equally spaced near the outer periphery of the measurement surface; and
a displacement detecting means for detecting a vertical displacement of each of said measurement auxiliary units by contact with the upper end of each of said measurement auxiliary units.

6. A flatness measuring apparatus according to claim 5, wherein said measurement auxiliary unit has at the lower end portion thereof a triangle-shaped horizontal piece with the top directed in the center of the measurement surface, and said horizontal piece has at the leading end thereof a contact mounted in such a manner as to be shifted inward from said displacement detecting means.

7. A flatness measuring apparatus according to claim 5, wherein said measurement auxiliary unit is supported by said stationary member via a ball slide.

8. A flatness measuring apparatus according to claim 5, wherein said measurement auxiliary unit is usually biased downward by a biasing means interposed between said measurement auxiliary unit and said stationary member.

9. A flatness measuring apparatus according to claim 5, wherein said displacement detecting means is an electric micrometer.
